# EUROPEAN PATENT APPLICATION

(11) **EP 4 779 267 A1**
(43) Date of publication of application: **22.07.2026**
(21) Application number: 25769268.1
(22) Date of filing: 03.03.2025
(51) Int. Cl.: G01C 21/34

(54) **ROUTE DETECTION METHOD AND APPARATUS, DEVICE, STORAGE MEDIUM AND COMPUTER PROGRAM PRODUCT**

(30) Priority: 14.03.2024 CN 202410309879
(71) Applicant: Tencent Technology (Shenzhen) Company Limited, Shenzhen, Guangdong 518057 (CN)
(72) Inventor: YU, Yuanyuan, Shenzhen, Guangdong 518057 (CN); XIE, Zhenzhuo, Shenzhen, Guangdong 518057 (CN); MENG, Fanrong, Shenzhen, Guangdong 518057 (CN)
(74) Representative: EP&C
(86) International application number: PCT/CN2025/080155
(87) International publication number: WO 2025/190096

(57) **Abstract**

A route detection method, comprising : acquiring a target navigation route to be tested, the target navigation route comprising a plurality of sequentially connected road segments (502); on the basis of the plurality of sequentially connected road segments, determining a plurality of pairs of adjacent road segments (504); on the basis of historical navigation routes, querying the pass frequency for every two adjacent road segments within a specified time range (506); and, on the basis of the pass frequency for every two adjacent road segments within the specified time range, obtaining a pass frequency sequence corresponding to the target navigation route, and, on the basis of the pass frequency sequence, determining whether the target navigation route passes through abnormal road segments (508).

## Description

### RELATED APPLICATION

This application claims priority to Chinese Patent Application No. 202410309879.1, filed with the China National Intellectual Property Administration on March 14, 2024 and entitled "ROUTE DETECTION METHOD AND APPARATUS, DEVICE, STORAGE MEDIUM AND COMPUTER PROGRAM PRODUCT", which is incorporated herein by reference in its entirety.

### FIELD OF THE TECHNOLOGY

This application relates to the field of computer technologies, and in particular, to a route detection method and apparatus, a computer device, a storage medium and a computer program product.

### BACKGROUND OF THE DISCLOSURE

With development and progress of computer technologies and Internet technologies, a user may perform route navigation by using a map navigation application before traveling. However, if some abnormalities, such as temporary road closures or traffic accidents, occur on actual roads temporarily, links in which these abnormalities occur cannot be avoided in time when a navigation route is generated, leading to poor rationality of route planning. When the user performs route navigation by using the navigation route and passes through the links with these abnormalities, the user has to temporarily change the route for detours. This not only wastes calculation resources and energy consumption of a navigation device, but also may add additional passing time, bringing great inconvenience to the user, and leading to poor user experience.

### SUMMARY

According to various embodiments of this application, a route detection method is provided. The method includes:
acquiring a to-be-detected target navigation route, the target navigation route including a plurality of sequentially connected links;
determining a plurality of pairs of mutually adjacent links based on the plurality of sequentially connected links;
querying a pass count of the mutually adjacent links within a specified time range based on a historical navigation route; and
obtaining, according to pass counts of the pairs of mutually adjacent links within the specified time range, a pass count sequence corresponding to the target navigation route, and determining, according to the pass count sequence, whether the target navigation route passes through an abnormal link.

According to various embodiments of this application, a route detection apparatus is provided. The apparatus includes:
an acquisition module, configured to acquire a to-be-detected target navigation route, the target navigation route including a plurality of sequentially connected links;
an adjacent link determination module, configured to determine a plurality of pairs of mutually adjacent links based on the plurality of sequentially connected links;
a pass count query module, configured to query a pass count of the mutually adjacent links within a specified time range based on a historical navigation route; and
an abnormality detection module, configured to: obtain, according to pass counts of the pairs of mutually adjacent links within the specified time range, a pass count sequence corresponding to the target navigation route, and determine, according to the pass count sequence, whether the target navigation route passes through an abnormal link.

According to various embodiments of this application, a computer device is provided. The computer device includes a memory and a processor. The memory has computer-readable instructions stored therein, and the processor, when executing the computer-readable instructions, implements operations of the foregoing route detection method.

According to various embodiments of this application, a computer-readable storage medium is provided. The computer-readable storage medium has computer-readable instructions stored therein, and the computer-readable instructions, when executed by a processor, implement operations of the foregoing route detection method.

According to various embodiments of this application, a computer program product is provided. The computer program product includes computer-readable instructions, and the computer-readable instructions, when executed by a processor, implement operations of the foregoing route detection method.

Details of one or more embodiments of this application are provided in the following accompanying drawings and descriptions. Other features, objectives, and advantages of this application become apparent from the description, the accompanying drawings, and the claims.

### BRIEF DESCRIPTION OF THE DRAWINGS

To describe technical solutions of embodiments of this application more clearly, the following briefly introduces accompanying drawings required to be used in description in the embodiments. Apparently, the accompanying drawings in the following description show only some embodiments of this application, and a person of ordinary skill in the art may obtain other drawings according to these accompanying drawings without creative effort.
FIG. 1 is a diagram of an application environment of a route detection method according to some embodiments.
FIG. 2 is a schematic diagram of a navigation route.
FIG. 3 is an enlarged view of a local link of a navigation route.
FIG. 4 is a distribution diagram of a pass traffic change trajectory in an enlarged view.
FIG. 5 is a schematic flowchart of a route detection method according to some embodiments.
FIG. 6 is a schematic flowchart of collecting statistics on pass counts of mutually adjacent links according to some embodiments.
FIG. 7 is a schematic diagram of a navigation route according to some other embodiments.
FIG. 8 is a schematic diagram of a navigation route according to still other embodiments.
FIG. 9 is a schematic diagram of an overall framework of route correction according to some embodiments.
FIG. 10 is a schematic diagram of a route before and after correcting according to some embodiments.
FIG. 11 is a structural block diagram of a route detection apparatus according to some embodiments.
FIG. 12 is a diagram of an internal structure of a computer device according to some embodiments.

### DESCRIPTION OF EMBODIMENTS

To make objectives, technical solutions, and advantages of this application clearer, the following further describes this application in detail with reference to the accompanying drawings and the embodiments. Specific embodiments described here are only used for explaining this application, but are not used for limiting this application.

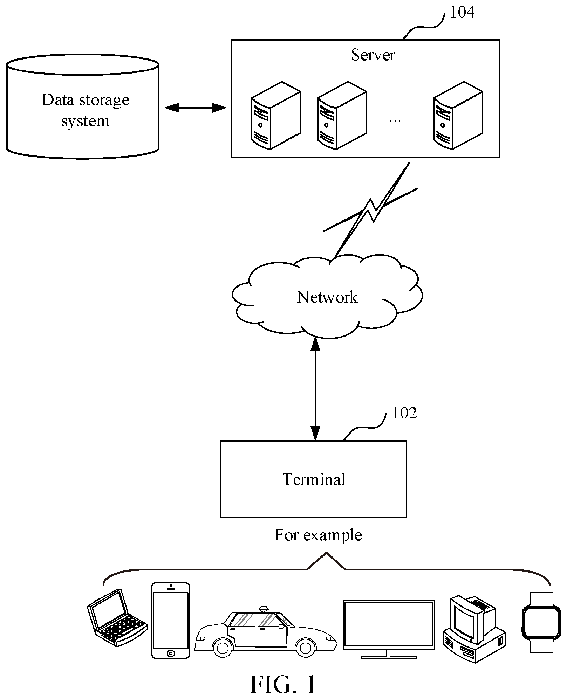

The route detection method provided in this embodiment of this application may be applied to an application environment shown in FIG. 1. A terminal 102 communicates with a server 104 through a network. A data storage system may store data that needs to be processed by the server 104. The data storage system may be integrated on the server 104, or may be placed on a cloud or another server. In the embodiments of the present disclosure including the embodiments of both the claims and the specification (hereinafter referred to as "all embodiments of the present disclosure"), the server 104 acquires a target navigation path generated based on a starting point position and an end point position, the target navigation route including a plurality of sequentially connected links, determines a plurality of pairs of mutually adjacent links based on the plurality of sequentially connected links, queries a pass count of the mutually adjacent links within a specified time range based on a historical navigation route, obtains, according to pass counts of all the pairs of mutually adjacent links within the specified time range, a pass count sequence corresponding to the target navigation route, and determines, according to the pass count sequence, whether the target navigation route passes through an abnormal link. Mutually adjacent links are pairs of links that are directly connected in a topological structure and support bidirectional connectivity. In other words, mutually adjacent links denote link pairs that share a common node and allow traversal in both directions within a network topology. In the application, a link may also be understood as a road section.

The terminal 102 may be, but is not limited to, various desktop computers, notebook computers, smart phones, tablet computers, Internet of things devices, and portable wearable devices. The Internet of things devices may be smart voice interaction devices, smart televisions, smart air conditioners, smart in-vehicle devices, and the like. The portable wearable devices may be smart watches, smart bracelets, head-mounted devices, and the like. The server 104 may be implemented by an independent server or a server cluster including a plurality of servers. This embodiment of this application may be applied to various scenarios, including, but not limited to, cloud technologies, artificial intelligence, intelligent transportation, assisted driving, and the like.

Map road network data includes a large quantity of links. A link is a smallest unit in the road network data, and the map road network data may be divided into billions of links. A plurality of links connected by topology form a route, that is, the route is formed by a link string. When there is a topological connection relationship between two links, for example, link1 is connected to link2, and a route direction is from link1 to link2, a vehicle pass count from link1 to link2 within a specified time range (for example, one hour, one day, one week, or one month) may be referred to as vehicle pass traffic from link1 to link2 within the specified time range.

In some implementations, to find an impassable (for example, temporarily closed or temporarily blocked) abnormal link in the road network, an abnormality may be detected based on pass traffic on each link in the road network. For example, if the pass traffic on a link is low for a long time, or traffic on a link suddenly decreases recently, the link may be recognized as an abnormal link. This manner is not combined with the target navigation route, which has a poor detection effect, and has a limited effect on a planned navigation route. For example, when it is found, based on pass traffic data, that pass traffic on a link is neither too high nor too low, the link may be recognized as a small road. During navigation route planning, it is highly likely that the link will not be avoided. Actually, when the pass traffic of a link adjacent to the link is several times (for example, 20 times) higher than the pass traffic of the link, it is highly likely that the link is abnormal. Because the link is not avoided during navigation route planning, a planned navigation route cannot meet a requirement of a user. This not only wastes calculation resources and energy consumption of a navigation device, but also may add additional passing time, bringing great inconvenience to the user, and leading to poor user experience.

According to the route detection method provided in all embodiments of the present disclosure, when whether the target navigation route passes through an abnormal link is determined, the abnormal link is recognized based on a traffic change trajectory (reflected by a pass count sequence) of the target navigation route instead of based on a pass count of each link. In particular, when the pass count of the link cannot reflect an abnormality, the abnormal link can be detected through the traffic change trajectory, so as to correct an abnormal route in the target navigation route, thereby improving rationality and accuracy of route planning, avoiding a waste of calculation resources and energy consumption of a route navigation device caused by improper navigation route planning, and improving the user experience of route navigation.

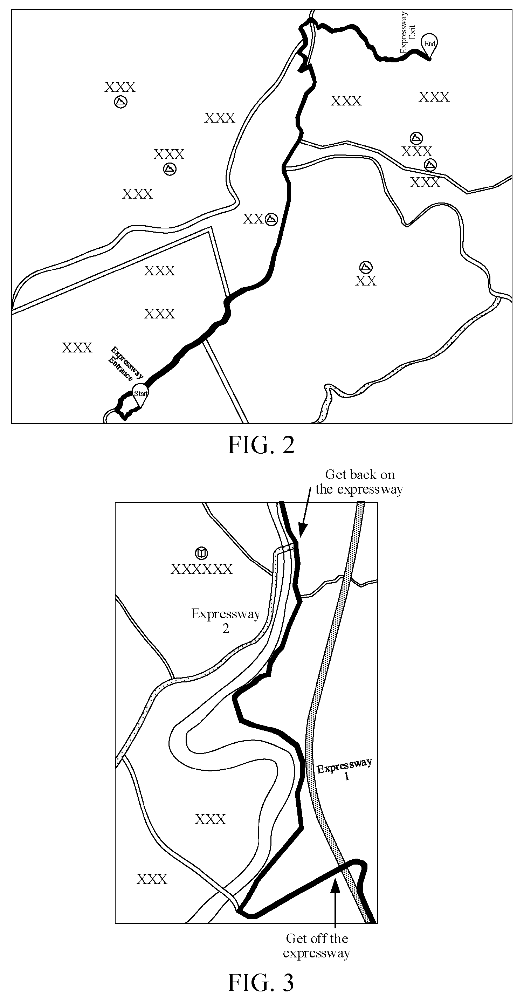

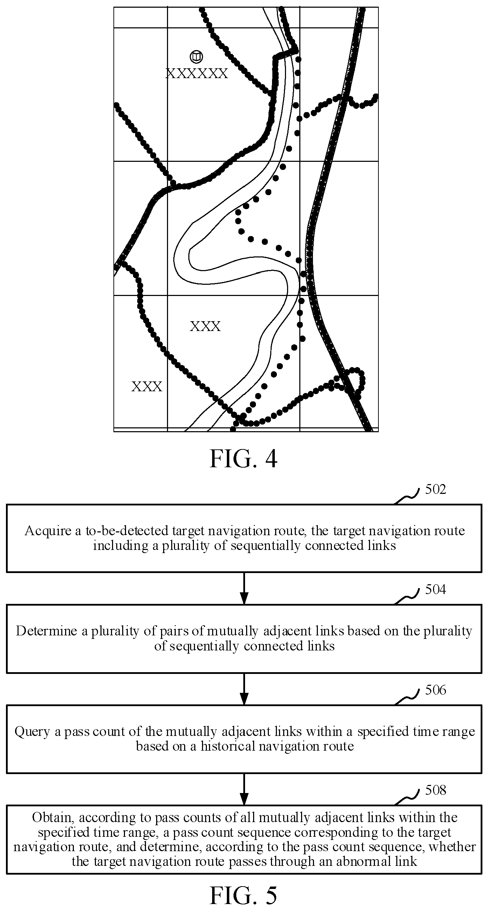

Generally, navigation starts from a low-level road at a starting point, navigates to a high-level road, and navigates to a low-level road when approaching an end point, that is, pass traffic from the starting point to the end point is generally of a change tendency of low->high->low. For example, a vehicle enters an expressway from a highway in region A, and then travels into a highway in region B from the expressway. Pass traffic of the expressway is relatively higher than pass traffic of the highways. If a change tendency of the pass traffic corresponding to the navigation route is to navigate from a high-pass traffic road to a low-traffic road with suddenly decreased pass traffic and then return to the high-pass traffic road, it may be considered that there is a high probability that the planned navigation route has an abnormality. FIG. 2 is a schematic diagram of a navigation route. The navigation route starts from a starting point to an expressway, and then gets off the expressway to an end point. FIG. 3 is an enlarged view of a local link of a navigation route. It can be learned that the navigation route gets off the expressway and then gets on the expressway halfway. FIG. 4 is a distribution diagram of a pass traffic change trajectory in an enlarged view. A link with denser dots represents larger pass traffic. It can be learned that, in the enlarged view, there is a situation of navigating from a high-pass traffic road to a low-pass traffic road and then returning to the high-pass traffic road, and another route with higher pass traffic, that is, easier to pass through, exists on a right side. According to the route detection method provided in all embodiments of the present disclosure, the local abnormal link may be recognized, and route repair may be performed.

In all embodiments of the present disclosure, e.g., as shown in FIG. 5, a route detection method is provided, which is described by using an example in which the method is applied to the server 104 in FIG. 1, and includes the following operations.

Operation 502: Acquire a to-be-detected target navigation route, the target navigation route including a plurality of sequentially connected links.

The target navigation route is a navigation route obtained by performing route planning based on a starting point and an end point, and the target navigation route includes the plurality of sequentially connected links. In all embodiments of the present disclosure, a terminal may transmit, based on a starting point and an end point input by a user, a navigation route generation request to a server providing a map navigation service. The server generates at least one navigation route based on the received navigation route generation request. The target navigation route may be one of the at least one navigation route. The server may perform abnormality detection on the target navigation route. In all embodiments of the present disclosure, the server may correct a detected target navigation route having an abnormal link to obtain a corrected navigation route, and return the corrected navigation route to the terminal. In all embodiments of the present disclosure, for the detected target navigation route having the abnormal link, the server may further filter the target navigation route having the abnormal link from the at least one navigation route, and return remaining navigation routes to the terminal.

Operation 504: Determine a plurality of pairs of mutually adjacent links based on the plurality of sequentially connected links.

The target navigation route obtained after the navigation route planning is completed is a preferred path between a starting point and an end point, and includes the plurality of sequentially connected links, that is, the plurality of links are sequentially connected according to a topological relationship. Based on this, the server may determine the plurality of pairs of mutually adjacent links according to the plurality of links included in the target navigation route. In all embodiments of the present disclosure, the server may sequentially traverse links that the target navigation route passes through, construct a current traversed link and a next traversed link into a pair of mutually adjacent links, and end traversing until the current traversed link is a penultimate link. In all embodiments of the present disclosure, the server may construct, starting from a second traversed link, the current traversed link and a previous traversed link into a pair of mutually adjacent links, and end traversing until the current traversed link is a reciprocal first link.

For example, the target navigation route is a route formed by sequentially connecting link1, link2, link3, link4, and link5 by topology, and the server may determine that the plurality of pairs of mutually adjacent links included in the target navigation route are sequentially: link1-link2, link2-link3, link3-link4, and link4-link5.

Operation 506: For each pair of mutually adjacent links, query a pass count of the each pair of the mutually adjacent links within a specified time range based on a historical navigation route.

The historical navigation route is a route generated and completed in the past for navigating a vehicle to pass. For the historical navigation route within a period of time in the past, the server may store a corresponding pass count. The period of time in the past may be specifically 30 minutes in the past, one hour in the past, one day in the past, one week in the past, one month in the past, three months in the past, or the like. A specific time range is not limited. The server may query a pass count of the mutually adjacent links within the specified time range based on the historical navigation route within the specified time range.

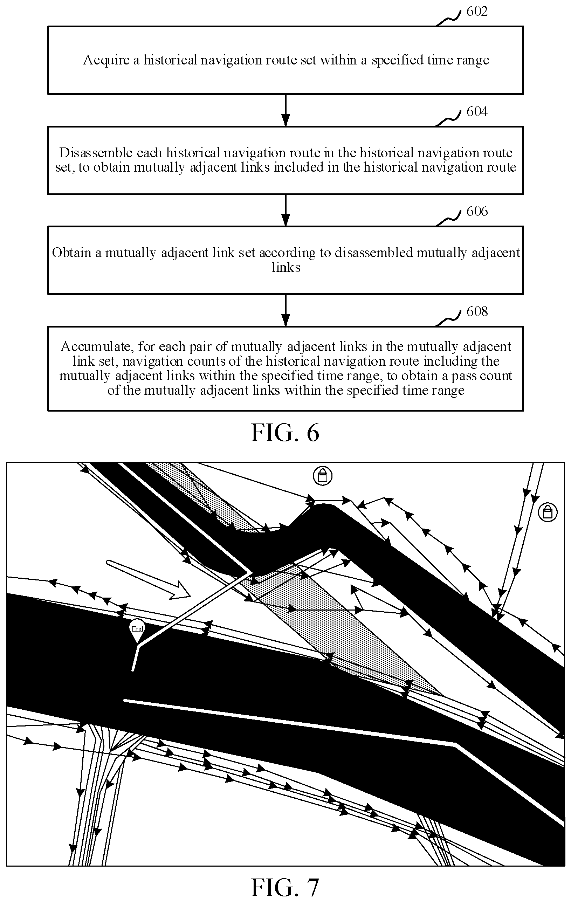

As shown in FIG. 6, in all embodiments of the present disclosure, to periodically update the pass count of the mutually adjacent links within the specified time range and ensure validity and timeliness of pass count data, the server may periodically (for example, every 30 minutes, every one hour, every one day, or every one month) perform the following operations.

Operation 602: Acquire a historical navigation route set within a specified time range.

To ensure timeliness of pass traffic data as much as possible, the server may set an execution period and set the specified time range for different regions. For example, for a hot spot region such as a city, the server may set to acquire a historical navigation route set within one hour in the past every 30 minutes, or set to acquire a historical navigation route set within one hour in the past every one hour. For a region with low traffic flow, such as an outer-ring road of the city, the server may set to acquire a historical navigation route set within one hour in the past every two hours. For another region with less traffic flow, such as a remote region, the server sets to acquire a historical navigation route set within one month in the past every one week. For a historical navigation route in the historical navigation route set, the server further needs to acquire a navigation count of each historical navigation route within the specified time range. For example, in a period of time in the past, the same historical navigation route was used by a plurality of users, and if 200 navigations were completed, a corresponding navigation count was 200.

Operation 604: Disassemble each historical navigation route in the historical navigation route set, to obtain mutually adjacent links included in the historical navigation route.

Operation 606: Obtain a mutually adjacent link set according to disassembled mutually adjacent links.

To determine pass counts between mutually adjacent links to accurately reflect a pass traffic change tendency on a link, the server may disassemble each historical navigation route in the historical navigation route set, to obtain the mutually adjacent links included in the historical navigation route.

For example, the historical navigation route set acquired by the server within the specified time range includes five historical navigation routes, which are respectively:
historical navigation route 1: link1, link2, link3, link4, and link5, and a navigation count is 500;
historical navigation route 2: link3, link4, link5, link6, and link7, and a navigation count is 100;
historical navigation route 3: link1, link2, link5, link6, and link7, and a navigation count is 50;
historical navigation route 4: link1, link2, link4, and link5, and a navigation count is 50; and
historical navigation route 5: link2, link3, link4, and link5, and a navigation count is 300.

The disassembled mutually adjacent links include:
link1-link2;
link2-link3;
link3-link4;
link4-link5;
link5-link6;
link6-link7;
link2-link5; and
link2-link4.

The foregoing data is merely exemplary, and a large quantity of historical navigation routes and a large quantity of mutually adjacent links will be obtained in an actual implementation process.

Operation 608: Accumulate, for each pair of mutually adjacent links in the mutually adjacent link set, navigation counts of the historical navigation route including the mutually adjacent links within the specified time range, to obtain a pass count of the mutually adjacent links within the specified time range.

In the foregoing example, it may be determined that the pass count of each pair of mutually adjacent links within the specified time range may be determined as follows:
link1-link2, and a pass count is 600;
link2-link3, and a pass count is 800;
link3-link4, and a pass count is 900;
link4-link5, and a pass count is 950;
link5-link6, and a pass count is 150;
link6-link7, and a pass count is 150;
link2-link5, and a pass count is 50; and
link2-link4, and a pass count is 50.

According to the foregoing operation 602 to operation 608, the server periodically updates the pass count of the mutually adjacent links within the specified time range, to ensure validity and timeliness of the pass count data, and can accurately collect statistics on and store the pass count of the mutually adjacent links that have a topological relationship in map road network data within the specified time range. The pass count reflects vehicle pass traffic between the mutually adjacent links. Therefore, after obtaining a plurality of pairs of mutually adjacent links in the target navigation route, the server may query a corresponding pass count within the specified time range according to data statistical result and according to the mutually adjacent links in the target navigation route, so that a subsequently generated pass count sequence is more accurate, thereby improving accuracy of abnormal route detection.

Operation 508: Obtain, according to pass counts of all the pairs of mutually adjacent links within the specified time range, a pass count sequence corresponding to the target navigation route, and determine, according to the pass count sequence, whether the target navigation route passes through an abnormal link.

In all embodiments of the present disclosure, the pass counts of all the pairs of the mutually adjacent links included in the target navigation route within the specified time range are sequentially arranged, and a pass count sequence corresponding to the target navigation route may be obtained. The pass count sequence reflects a traffic change tendency of the target navigation route, and an abnormal link in the target navigation route can be detected through the traffic change tendency. In particular, when the pass count of the link cannot reflect an abnormality, the abnormal link can be detected through the traffic change tendency.

According to the foregoing analysis, generally, navigation starts from a low-level road at a starting point, navigates to a high-level road, and navigates to a low-level road when approaching an end point, that is, pass traffic from the starting point to the end point is generally of a change tendency of low->high->low. If the traffic change tendency of the pass traffic corresponding to the navigation route is to navigate from a high-pass traffic road to a low-traffic road with suddenly decreased pass traffic and then return to the high-pass traffic road, it may be considered that there is a high probability that the planned navigation route has an abnormality. Therefore, based on this, the server may determine a corresponding traffic change tendency based on the pass count sequence corresponding to the target navigation route, and compare the traffic change tendency corresponding to the target navigation route with a traffic change tendency corresponding to a normal route or an abnormal route, to determine whether the target navigation route passes through the abnormal link.

In all embodiments of the present disclosure, the obtaining, according to pass counts of all the pairs of mutually adjacent links within the specified time range, a pass count sequence corresponding to the target navigation route, and determining, according to the pass count sequence, whether the target navigation route passes through an abnormal link includes: arranging, according to sequential order of all the pairs of mutually adjacent links on the target navigation route, the pass counts corresponding to all the pairs of mutually adjacent links within the specified time range, to obtain the pass count sequence corresponding to the target navigation route; and determining, when a value change tendency corresponding to the pass count sequence does not match a preset passing trajectory, that the target navigation route passes through the abnormal link.

In all embodiments of the present disclosure, the preset passing trajectory reflects a traffic change tendency corresponding to a normal route. For example, the preset passing trajectory is a trajectory of passing from a low-traffic link to a high-traffic link and then returning to the low-traffic link.

Specifically, after obtaining the pass count sequence corresponding to the target navigation route, the server may determine the value change tendency corresponding to the pass count sequence. For example, whether the value change tendency is from a low value to a high value and then to a low value. The value change tendency corresponding to the pass count sequence is matched with the preset passing trajectory. It is determined, when the value change tendency does not match the preset passing trajectory, that the target navigation route passes through an abnormal link. It is determined, when the value change tendency matches the preset passing trajectory, that the target navigation route does not pass through the abnormal link, that is, the target navigation route passes abnormality detection.

In all embodiments of the present disclosure, the determining, when the value change tendency corresponding to the pass count sequence does not match the preset passing trajectory, that the target navigation route passes through an abnormal link includes: acquiring, for each pass count in the pass count sequence, adjacent pass counts located on two sides of a current pass count from the pass count sequence; and determining, when the current pass count is less than a preset threshold and the adjacent pass counts on the two sides of the current pass count are greater than N times a value of the current pass count, that the value change tendency corresponding to the pass count sequence does not match the preset passing trajectory, and determining that the mutually adjacent links corresponding to the current pass count are the abnormal link, N being a number greater than 10.

The adjacent pass counts located on the two sides of the current pass count are relatively adjacent pass counts located on the two sides of the current pass count in the pass count sequence, and are not necessarily directly adjacent pass counts. That is, as long as there is a sub-sequence with a value change tendency that does not match the preset passing trajectory in the pass count sequence, the sub-sequence has an abnormal link. It may be determined, when the current pass count is less than the preset threshold and the adjacent pass counts on the two sides of the current pass count are greater than N times the value of the current pass count, that the value change tendency corresponding to the pass count sequence does not match the preset passing trajectory. A value of N may be determined according to actual data analysis. For example, the value of N may be 20. For example, the current pass count is 50, and the adjacent pass counts on the two sides are 5000, which indicates a significant difference. This may determine that the mutually adjacent links corresponding to the current pass count have an abnormality or that a later link in the mutually adjacent links has an abnormality.

For example, the target navigation route is link1-link2-link4-link5. In the foregoing example, it may be determined that the pass count sequence corresponding to the target navigation route is: 600-50-950. The target navigation route has experienced a corresponding value change region, which does not match with a change tendency that a pass traffic from the starting point to the end point is generally of low->high->low under normal conditions, and it may be determined that the target navigation route has an abnormal link, for example, a temporary road closure may occur.

In all embodiments of the present disclosure, the obtaining, according to pass counts of all the pairs of mutually adjacent links within the specified time range, a pass count sequence corresponding to the target navigation route, and determining, according to the pass count sequence, whether the target navigation route passes through an abnormal link includes: arranging, according to sequential order of all the pairs of mutually adjacent links on the target navigation route, the pass counts corresponding to all the pairs of mutually adjacent links within the specified time range, to obtain the pass count sequence corresponding to the target navigation route; and determining, when a value change tendency corresponding to the pass count sequence matches a preset passing trajectory, that the target navigation route passes through the abnormal link.

In all embodiments of the present disclosure, the preset passing trajectory reflects a traffic change tendency corresponding to an abnormal route. For example, the preset passing trajectory is a trajectory of passing from a high-traffic link to a low-traffic link and then returning to the high-traffic link.

Specifically, after obtaining the pass count sequence corresponding to the target navigation route, the server may determine the value change tendency corresponding to the pass count sequence. For example, whether the value change tendency is from a high value to a low value. The server may compare the value change tendency corresponding to the pass count sequence with the preset passing trajectory, and determine, when the value change tendency matches the preset passing trajectory, that the target navigation route passes through the abnormal link.

FIG. 7 is a schematic diagram of a navigation route according to an embodiment. In FIG. 7, a densely filled region is a traffic intensive region, a white link is a navigation route, and the navigation route apparently passes through a zero-pass traffic link (that is, a link to which an arrow points in FIG. 7). Apparently, this navigation route is not properly planned.

In all embodiments of the present disclosure, the server may further determine, when a current pass count is greater than a preset threshold, and adjacent pass counts on two sides are greater than M times the current pass count, that the target navigation route passes through a "small road", that is, a passable link with a poor passing capability. In event that it is detected, for a planned target navigation route, that a link of this type exists, the server may prompt a terminal, or display related prompt information for a user to choose.

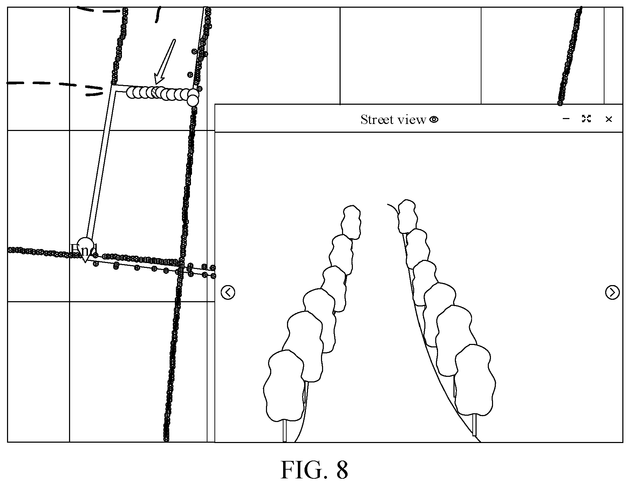

FIG. 8 is a schematic diagram of a navigation route according to an embodiment. In FIG. 8, denser small circles represent larger pass traffic. A white line segment is a navigation route. The navigation route passes through a link with relatively low pass traffic (a link to which an arrow points in FIG. 8) and then returns to a traffic-dense link. The server may determine that the link is a passable small road.

In all embodiments of the present disclosure, the foregoing route detection method further includes:
marking an abnormal mark for the abnormal link when the target navigation route passes through the abnormal link; and
performing, when the abnormal mark of the abnormal link does not become invalid and for a received navigation route generation request, route planning for the navigation route generation request by avoiding the abnormal link.

That is, for a detected abnormal link, the server may mark the abnormal mark for the abnormal link. For a subsequently received navigation route generation request, when the abnormal mark of the abnormal link does not become invalid, the server may plan by avoiding these links marked with abnormal marks during route planning. In this way, an abnormality detection result may flow back to map road network data to solve a problem of inaccurate or incomplete data in a map road network, thereby facilitating rationality and completeness of subsequent navigation route planning, and improving user experience of route navigation. As new navigation routes are continuously generated, new pass traffic changes. For the same mutually adjacent links, a pass count within a specified time range continuously changes with periodic detection, and a corresponding abnormal mark may be marked as invalid.

In all embodiments of the present disclosure, the foregoing route detection method further includes:
performing, when the target navigation route passes through the abnormal link, correction processing on the target navigation route, to obtain a navigation correction route, the navigation correction route not including the abnormal link.

In all embodiments of the present disclosure, the performing, when the target navigation route passes through the abnormal link, correction processing on the target navigation route, to obtain a navigation correction route includes: determining, when the target navigation route passes through the abnormal link, two endpoints corresponding to the abnormal link, regenerating a local path generation according to the two endpoints, and replacing the abnormal path in the target navigation route with the generated local path, to obtain the navigation correction route.

In all embodiments of the present disclosure, if it is determined that the target navigation route has an abnormal path, path planning may be performed again for the target navigation route based on a topological relationship of a remaining normal link in the target navigation route in a road network, to obtain the navigation correction route. The navigation correction route is more proper, and can improve navigation pass efficiency.

According to the foregoing route detection method, a target navigation route is acquired, a plurality of pairs of mutually adjacent links included in the target navigation route are determined, a pass count of the mutually adjacent links within a specified time range is queried based on a historical navigation path, a pass count sequence corresponding to the target navigation route is obtained according to the pass counts of all the pairs of mutually adjacent links within the specified time range, and whether the target navigation route passes through an abnormal link is determined according to the pass count sequence. That is, when whether the target navigation route passes through an abnormal link is determined, the abnormal link is recognized based on a traffic change trajectory (reflected by a pass count sequence) of the target navigation route instead of based on a pass count of each link. In particular, in event that the pass count of the link cannot reflect an abnormality, the abnormal link can be detected through the traffic change trajectory, thereby improving rationality and accuracy of route planning, avoiding a waste of calculation resources and energy consumption of a route navigation device caused by improper navigation route planning, and improving the user experience of route navigation.

To find sudden abnormalities on a road such as temporary road closures, more timely, for example, a temporary road closure occurs within one hour, in all embodiments of the present disclosure, the server may find an abnormality by using finer-grained traffic. For example, an abnormality is detected by using a historical navigation route within one hour because pass traffic on an abnormal link within one day may still be very large, and the abnormality cannot be detected. The abnormality can be recognized by using pass traffic data within one hour, that is, higher timeliness of the pass traffic data is better, for example, a historical navigation route within half an hour or a historical navigation route within ten minutes. When traffic within a fine-grained time range indicates that there is an abnormality, an abnormal event occurs within a relatively short time. When traffic within the fine-grained time range indicates that there is no abnormality, data within a longer time range may be used to perform abnormality detection.

In all embodiments of the present disclosure, the querying a pass count of the mutually adjacent links within a specified time range based on a historical navigation route includes: querying a pass count of the mutually adjacent links within the specified time range based on a historical navigation route within a first specified time range; and continuing to query a pass count of the mutually adjacent links within the specified time range based on a historical navigation route within a second specified time range when it is determined, according to the pass counts of all the pairs of mutually adjacent links within the first specified time range, that the target navigation route does not pass through the abnormal link, where a time granularity of the second specified time range is greater than a time granularity of the first specified time range.

In all embodiments of the present disclosure, historical navigation route data within different specified time ranges is used to cover different regions. The time granularity of the second specified time range is greater than the time granularity of the first specified time range. For example, the first specified time range is daily traffic, that is, historical navigation route data within one day, and the second specified time range is monthly traffic, that is, historical navigation route data within one month. In all embodiments of the present disclosure, the time granularity is the minimum time unit. In event that the pass count indicated based on the historical navigation route within the first specified time range is very high, the historical navigation route within the second specified time range does not need to be used for detection; otherwise, in event that the pass count indicated based on the historical navigation route within the first specified time range is very low and an abnormality cannot be detected, the historical navigation route data of a longer time granularity, that is, within the second specified time range may be continued to be used for detecting a problem, and so on. In this way, abnormality detection of navigation routes in various regions in the map road network data may be covered. In particular, when the pass traffic is neither too high nor too low, but is significantly different from the pass traffic of mutually adjacent links on two sides, an abnormality can be recognized, thereby improving rationality of route planning.

In all embodiments of the present disclosure, the obtaining, according to pass counts of all the pairs of mutually adjacent links within the specified time range, a pass count sequence corresponding to the target navigation route, and determining, according to the pass count sequence, whether the target navigation route passes through an abnormal link includes:
obtaining, according to the pass counts of all the pairs of mutually adjacent links within the first specified time range, a first pass count sequence corresponding to the navigation route, and determining, according to the first pass count sequence, whether the target navigation route passes through the abnormal link; and
continuing to obtain, when it is determined, according to the first pass count sequence, that the target navigation route does not pass through the abnormal link and according to the pass counts of all the pairs of mutually adjacent links within the second specified time range, a second pass count sequence corresponding to the navigation route, and determining, according to the second pass count sequence, whether the target navigation route passes through the abnormal link.

According to the foregoing manner, the time granularity is different, and the pass counts corresponding to the mutually adjacent links are different. In event that an abnormality needs to be detected by attempting to use data within different time ranges, the server needs to separately determine a pass count sequence corresponding to the target navigation route within different time ranges, to accurately detect whether the target navigation route has an abnormal link.

In all embodiments of the present disclosure, the foregoing route detection method further includes:
correcting, when it is determined, according to the pass counts of all the pairs of mutually adjacent links within the first specified time range, that the target navigation route passes through the abnormal link, the target navigation route by detouring the abnormal link, to obtain a corrected navigation route; and correcting, when it is determined, according to the pass counts of all the pairs of mutually adjacent links within the first specified time range, that the target navigation route does not pass through the abnormal link and it is determined, according to the pass counts of all the pairs of mutually adjacent links within the second specified time range, that the target navigation route passes through the abnormal link, the target navigation route by avoiding the abnormal link, to obtain the corrected navigation route.

According to the foregoing manner, the time granularity is different, and the pass counts corresponding to the mutually adjacent links are different. In event that an abnormality needs to be detected by attempting to use data within different time ranges, the server needs to separately determine whether a pass count sequence corresponding to the target navigation route within different time ranges has an abnormal link, to accurately detect whether the target navigation route has an abnormal link.

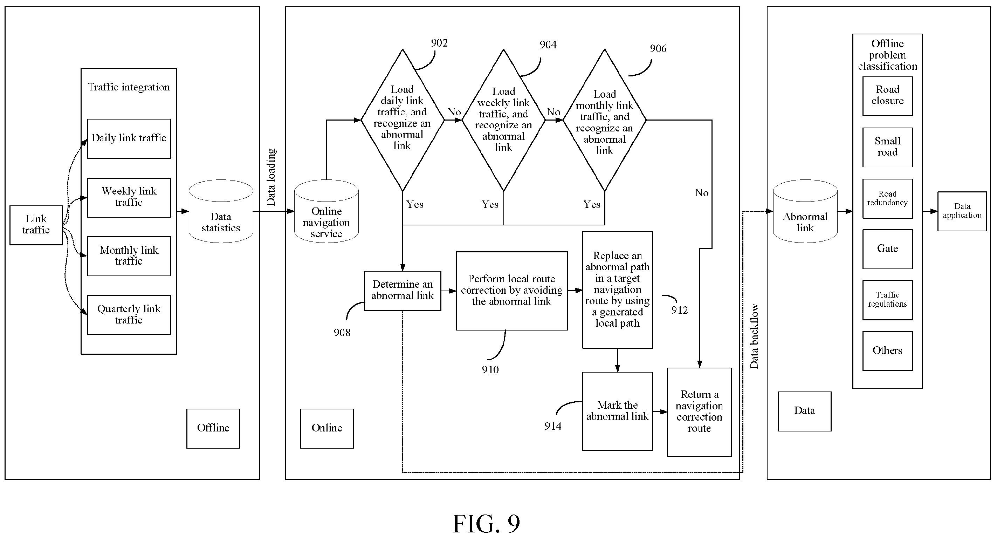

FIG. 9 is a schematic diagram of an overall framework of route correction according to an embodiment. Referring to FIG. 9, first, traffic is integrated offline. Link traffic may be collected according to a time granularity. A server collects statistics on daily link traffic, weekly link traffic, monthly link traffic, quarterly link traffic, and hourly link traffic, to obtain a corresponding pass count of each link at different time granularity. Next, an online navigation service may load the foregoing statistical data. When a route navigation request is received, a target navigation route is generated, and then abnormality detection is performed, as shown in FIG. 9, specifically including the following operations:

Operation 902: Load daily link traffic, recognize whether the target navigation route has an abnormal link, and if the target navigation route does not have the abnormal link, perform operation 904, or if the target navigation route has the abnormal link, perform operation 908.

Operation 904: Continue to load weekly link traffic, recognize whether the target navigation route has an abnormal link, and if the target navigation route does not have the abnormal link, perform operation 906, or if the target navigation route has the abnormal link, perform operation 908.

Operation 906: Continue to load monthly link traffic, recognize whether the target navigation route has an abnormal link, and if the target navigation route has the abnormal link, end recognition and return to a recall route, or if the target navigation route does not have the abnormal link, perform operation 908.

Operation 908: Determine the abnormal link.

Operation 910: Perform local route correction by avoiding the abnormal link.

Operation 912: Replace an abnormal path in the target navigation route with a generated local path, to obtain a navigation correction route.

Operation 914: Mark the abnormal link.

In this way, the abnormal link may be avoided during subsequent route planning.

In all embodiments of the present disclosure, the route correction method includes the following operations:
1: Acquire a historical navigation route set within a specified time range.
2: Disassemble each historical navigation route in the historical navigation route set, to obtain mutually adjacent links included in the historical navigation route.
3: Obtain a mutually adjacent link set according to disassembled mutually adjacent links.
4: Accumulate, for each pair of mutually adjacent links in the mutually adjacent link set, navigation counts of the historical navigation route including the mutually adjacent links within the specified time range, to obtain a pass count of the mutually adjacent links within the specified time range.
5: Acquire a to-be-detected target navigation route.
6: Determine a plurality of pairs of mutually adjacent links included in the target navigation route.
7: For each pair of mutually adjacent links, query a pass count of the each pair of mutually adjacent links within the specified time range based on a historical navigation route within a first specified time range.
8: Arrange, according to sequential order of all the pairs of mutually adjacent links on the target navigation route, the pass counts corresponding to all the pairs of mutually adjacent links within the first specified time range, to obtain a first pass count sequence corresponding to the target navigation route, and determine, when a value change tendency corresponding to the first pass count sequence does not match a preset passing trajectory, that the target navigation route passes through an abnormal link, the preset passing trajectory reflecting a traffic change tendency corresponding to a normal route.
9: Correct, when it is determined, according to the pass counts of all the pairs of mutually adjacent links within the first specified time range, that the target navigation route passes through the abnormal link, the target navigation route by avoiding the abnormal link, to obtain a corrected navigation route.
10: For each pair of mutually adjacent links, continue to query a pass count of the each pair of mutually adjacent links within the specified time range based on a historical navigation route within a second specified time range when it is determined, according to the pass counts of all the pairs of mutually adjacent links within the first specified time range, that the target navigation route does not pass through the abnormal link.
11: Arrange, according to sequential order of all the pairs of mutually adjacent links on the target navigation route, the pass counts of all the pairs of mutually adjacent links within the second specified time range, to obtain a second pass count sequence corresponding to the target navigation route, and determine, when a value change tendency corresponding to the second pass count sequence does not match a preset passing trajectory, that the target navigation route passes through the abnormal link.
12: Determine, when it is determined, according to the pass counts of all the pairs of mutually adjacent links within the second specified time range, that the target navigation route does not pass through the abnormal link, that the target navigation route does not have the abnormal link.
13: Correct, when it is determined, according to the pass counts of all the pairs of mutually adjacent links within the second specified time range, that the target navigation route passes through the abnormal link, the target navigation route by avoiding the abnormal link, to obtain the corrected navigation route.
14: Mark an abnormal mark for the abnormal link, and perform, when the abnormal mark of the abnormal link does not become invalid and for a received navigation route generation request, route planning for the navigation route generation request by avoiding the abnormal link.

The embodiment of this application is described by using a specific example. First, pass traffic, that is, a pass count, including hourly, daily, weekly, monthly, and quarterly traffic, between two links having a topological connection relationship in a map road network is loaded. After route planning is completed and a target navigation route is obtained, pass counts on an entire target navigation route are calculated. For example, a link string after the route planning is link1, link2, link3, link4, ..., linkn, and n-1 pieces of transfer traffic f1, f2, f3, f4, ..., and fn-1 may be obtained, where f1 represents a pass count between link1 and link2, f2 represents a pass count between link2 and link3, and so on. Then, the pass counts are traversed, and whether there is a case that a pass count on left and right sides of the current pass count is many times (for example, 20 times) higher than the current pass count and the current pass count is very small determined, for example, a pass count sequence is 10, 10, 2000, 2000, 3000, 4, 3, 5, 100, 1000, 2000, 20, 10, and 10, there is a sudden drop in traffic in the middle, the navigation route passes through a low-traffic region, and the navigation route has an abnormality. The hourly traffic is used to find a problem of dynamic road closures and traffic regulations more timely. For example, a road was closed one hour ago, the daily traffic is still large, and a route problem cannot be recognized. The problem can be recognized by using the daily traffic, and higher traffic timeliness is better. For example, half-hour traffic, ten-minute traffic, and hourly traffic mainly find a problem of a hot spot region, and the hourly traffic cannot cover a remote region. Daily, weekly, monthly, and quarterly traffic is used to cover different regions. If both the daily traffic and the transfer traffic are very high, the weekly traffic, the monthly traffic, and the quarterly traffic do not need to be detected. When the daily traffic does not cover incompletely, a problem is detected again by attempting to use the weekly traffic. The monthly traffic is used if the weekly traffic cannot cover. Finally, the quarterly traffic is used, which can basically cover an entire road network region. In addition, after an abnormal link is detected, the abnormal link is repaired. For example, when a route is recalculated by avoiding the abnormal link, or a plurality of navigation routes are planned, the abnormal link is replaced with a local route that does not pass through the abnormal link. For a map navigation service, there may be ten million navigation requests each day. Millions of abnormal links can be recognized each day by using the route detection method according to the embodiments of this application. For the recognized abnormal links, the abnormal links may further be classified. For example, a plurality of types of abnormal links are recognized, such as traffic restrictions, roads, gates, road closures, and redundant roads. After being marked with these abnormal categories, these links may be used during subsequent route planning, to solve improper problems in route planning.

All embodiments of the present disclosure may be applied to a vehicle navigation scenario. For example, a user may input a starting location and a destination through a terminal. A server performs route planning according to the starting location and the destination based on map road network data, to obtain N navigation routes. The server performs abnormality detection on each navigation route according to the method according to this embodiment of this application. If the navigation route has an abnormal link, the server may return prompt information to the terminal, or the server may correct the abnormal link in the navigation route, and return a navigation correction route to the terminal.

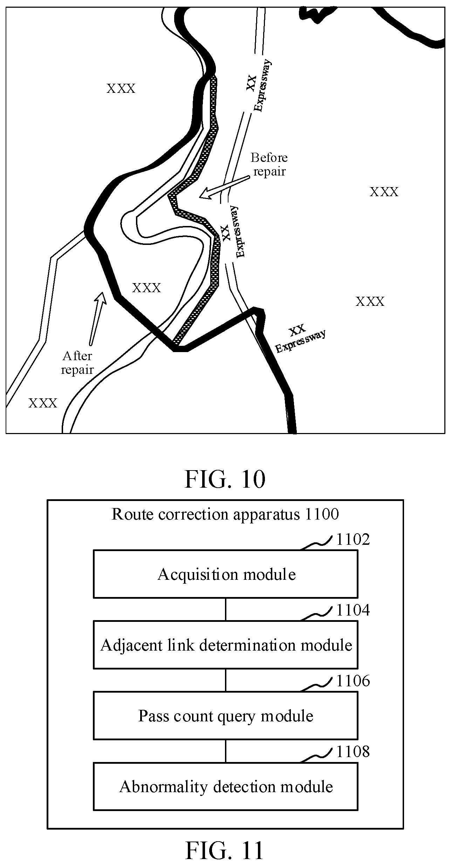

FIG. 10 is a schematic diagram of a route before and after correcting according to an embodiment. Referring to FIG. 10, an abnormal link in a navigation route is recognized and then repaired to a better pass route. According to the route detection method provided in this embodiment of this application, a problem in route planning can be found online in real time, thereby avoiding pushing a poor route to a user, and improving product experience. In addition, a data problem is automatically found, thereby reducing manpower investment in data operations to some extent.

Although all of the operations in the flowcharts involved in all the foregoing embodiments of the present disclosure are displayed in the order indicated by the arrows, these operations are unnecessarily executed in the order indicated by the arrows. Unless otherwise explicitly specified in this application, execution of the operations is not strictly limited, and the operations may be performed in other sequences. In addition, at least part of the operations in the flowcharts involved in the foregoing embodiments may include a plurality of operations or a plurality of stages. These operations or stages are not necessarily performed at the same moment but may be performed at different moments. These operations or stages are not necessarily sequentially performed, but may be performed in turn or alternately with other operations or at least part of the operations or stages in other operations.

Based on the same inventive concept, embodiments of this application further provide a route detection apparatus configured to implement the route detection method involved above. An implementation solution provided by the apparatus for solving a problem is similar to the implementation solution recorded in the foregoing method. Therefore, for specific limitations on one or more route detection apparatuses provided below, refer to limitations on the foregoing route detection method. Details are not described herein again.

In all embodiments of the present disclosure, e.g., as shown in FIG. 11, a route detection apparatus 1100 is provided, including: an acquisition module 1102, an adjacent link determination module 1104, a pass count query module 1106, and an abnormality detection module 1108.

The acquisition module 1102 is configured to obtain a to-be-detected target navigation route, the target navigation route including a plurality of sequentially connected links.

The adjacent link determination module 1104 is configured to determine a plurality of pairs of mutually adjacent links based on the plurality of sequentially connected links.

The pass count query module 1106 is configured to, for each pair of mutually adjacent links, query a pass count of the each pair of mutually adjacent links within a specified time range based on a historical navigation route.

The abnormality detection module 1108 is configured to: obtain, according to the pass counts of all the pairs of mutually adjacent links within the specified time range, a pass count sequence corresponding to the target navigation route, and determine, according to the pass count sequence, whether the target navigation route passes through an abnormal link.

In all embodiments of the present disclosure, the route detection apparatus 1100 further includes:
a statistical module, configured to: acquire a historical navigation route set within the specified time range; disassemble each historical navigation route in the historical navigation route set, to obtain mutually adjacent links included in the historical navigation route; obtain a mutually adjacent link set according to disassembled mutually adjacent links; and accumulate, for each pair of mutually adjacent links in the mutually adjacent link set, navigation counts of the historical navigation route including the mutually adjacent links within the specified time range, to obtain the pass count of the mutually adjacent links within the specified time range.

In all embodiments of the present disclosure, the pass count query module 1106 is further configured to: for each pair of mutually adjacent links, query a pass count of the each pair of mutually adjacent links within the specified time range based on a historical navigation route within a first specified time range; and continue to query a pass count of the mutually adjacent links within the specified time range based on a historical navigation route within a second specified time range in response to a determination, according to the pass counts of all the pairs of mutually adjacent links within the first specified time range, that the target navigation route does not pass through the abnormal link, a time granularity of the second specified time range being greater than a time granularity of the first specified time range.

In all embodiments of the present disclosure, the abnormality detection module 1108 is further configured to: obtain, according to the pass counts of all the pairs of mutually adjacent links within the first specified time range, a first pass count sequence corresponding to the navigation route, and determine, according to the first pass count sequence, whether the target navigation route passes through the abnormal link; and continue to obtain, in response to a determination, according to the first pass count sequence, that the target navigation route does not pass through the abnormal link and according to the pass counts of all the pairs of mutually adjacent links within the second specified time range, a second pass count sequence corresponding to the navigation route, and determine, according to the second pass count sequence, whether the target navigation route passes through the abnormal link.

In all embodiments of the present disclosure, the route detection apparatus 1100 further includes:
a correction module, configured to: correct, in response to a determination, according to the pass counts of all the pairs of mutually adjacent links within the first specified time range, that the target navigation route passes through the abnormal link, the target navigation route by avoiding the abnormal link, to obtain a corrected navigation route; and correct, in response to a determination, according to the pass counts of all the pairs of mutually adjacent links within the first specified time range, that the target navigation route does not pass through the abnormal link and in response to a determination, according to the pass counts of all the pairs of mutually adjacent links within the second specified time range, that the target navigation route passes through the abnormal link, the target navigation route by avoiding the abnormal link, to obtain the corrected navigation route.

In all embodiments of the present disclosure, the abnormality detection module 1108 is further configured to: arrange, according to sequential order of all the pairs of mutually adjacent links on the target navigation route, the pass counts corresponding to all the pairs of mutually adjacent links within the specified time range, to obtain the pass count sequence corresponding to the target navigation route, and determine, when a value change tendency corresponding to the pass count sequence does not match a preset passing trajectory, that the target navigation route passes through the abnormal link.

In all embodiments of the present disclosure, the abnormality detection module 1108 is further configured to: acquire, for each pass count in the pass count sequence, adjacent pass counts located on two sides of a current pass count from the pass count sequence; and determine, when the current pass count is less than a preset threshold and the adjacent pass counts on the two sides of the current pass count are greater than N times a value of the current pass count, that the value change tendency corresponding to the pass count sequence does not match the preset passing trajectory, and determine that the mutually adjacent links corresponding to the current pass count are the abnormal link, N being a number greater than 10.

In all embodiments of the present disclosure, the route detection apparatus 1100 further includes:
a marking module, configured to mark an abnormal mark for the abnormal link when the target navigation route passes through the abnormal link; and
a route planning module, configured to perform, when the abnormal mark of the abnormal link does not become invalid and for a received navigation route generation request, route planning for the navigation route generation request by avoiding the abnormal link.

In all embodiments of the present disclosure, the route detection apparatus 1100 further includes:
a correction module, configured to perform, when the target navigation route passes through the abnormal link, correction processing on the target navigation route, to obtain a navigation correction route, the navigation correction route not including the abnormal link.

In all embodiments of the present disclosure, the correction module is further configured to: determine, when the target navigation route passes through the abnormal link, two endpoints corresponding to the abnormal link, regenerate a local path according to the two endpoints, and replace the abnormal path in the target navigation route with the generated local path, to obtain a navigation correction route.

According to the foregoing route detection apparatus 1100, a target navigation route is acquired, a plurality of pairs of mutually adjacent links included in the target navigation route are determined, for each pair of mutually adjacent links, a pass count of the each pair of mutually adjacent links within a specified time range is queried based on a historical navigation path, a pass count sequence corresponding to the target navigation route is obtained according to the pass counts of all the pairs of mutually adjacent links within the specified time range, and whether the target navigation route passes through an abnormal link is determined according to the pass count sequence. That is, when whether the target navigation route passes through an abnormal link is determined, the abnormal link is recognized based on a traffic change trajectory (reflected by a pass count sequence) of the target navigation route instead of based on a pass count of each link. In particular, when the pass count of the link cannot reflect an abnormality, the abnormal link can be detected through the traffic change trajectory, thereby improving rationality and accuracy of route planning, avoiding a waste of calculation resources and energy consumption of a route navigation device caused by improper navigation route planning, and improving the user experience of route navigation.

Various modules in foregoing route detection apparatus 1100 may be completely or partially implemented through software, hardware, or a combination thereof. Each of the foregoing modules may be embedded in or independent of a processor in a computer device, or may be stored in a memory in the computer device in a software form, so that the processor invokes the modules to perform operations corresponding to the foregoing modules.

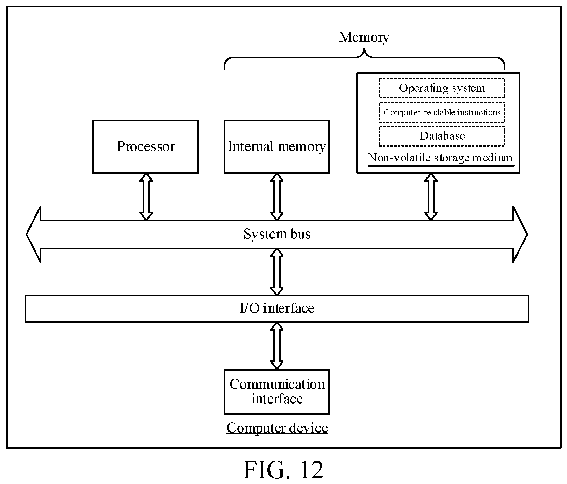

In all embodiments of the present disclosure, a computer device is provided. The computer device may be a server, and a diagram of an internal structure of the computer device may be shown in FIG. 12. The computer device includes a processor, a memory, an input/output (called I/O for short) interface, and a communication interface. The processor, the memory, and the I/O interface are connected with each other through a system bus. The communication interface is connected to the system bus through the I/O interface. The processor of the computer device is configured to provide computing and control capabilities. The memory of the computer device includes a non-volatile storage medium and an internal memory. The non-volatile storage medium stores an operating system, computer-readable instructions, and a database. The internal memory provides an environment for the operation of the operating system and computer-readable instructions in the non-volatile storage medium. The database of the computer device is configured to store map road network data, abnormal link data, and the like. The input/output interface of the computer device is configured to exchange information between the processor and an external device. The communication interface of the computer device is configured to connect and communicate with an external terminal through a network. The computer-readable instructions, when executed by the processor, implement a route detection method.

The structure shown in FIG. 12 is merely a block diagram of a partial structure related to the solutions of this application, and does not constitute a limitation on the computer device to which the solutions of this application are applied. Specifically, the computer device may include more or fewer components than those shown in the figure, have some components combined, or have a different component arrangement.

In all embodiments of the present disclosure, a computer device is provided, which includes a memory and a processor. The memory has computer-readable instructions stored therein, and the processor, when executing the computer-readable instructions, implements operations of the route detection method according to this embodiment of this application.

In all embodiments of the present disclosure, a computer-readable storage medium is provided, which has computer-readable instructions stored therein. The computer-readable instructions, when executed by a processor, implement operations of the route detection method according to any one of the embodiments of this application.

In all embodiments of the present disclosure, a computer program product is provided, including computer-readable instructions. The computer-readable instructions, when executed by a processor, implement operations of the route detection method according to this embodiment of this application.

Both user information (including, but not limited to, user equipment information, user personal information, and the like) and data (including, but not limited to, data for analysis, stored data, displayed data, and the like) involved in this application are information and data that are authorized by a user or fully authorized by all parties. Collection, use, and processing of related data need to comply with relevant laws and regulations of relevant countries and regions.

A person of ordinary skill in the art can understand that all or some of the processes of the methods in the foregoing embodiments may be implemented by computer-readable instructions instructing relevant hardware. The computer-readable instructions may be stored in a non-volatile computer-readable storage medium. When the computer-readable instructions are executed, the processes in the foregoing method embodiments may be implemented. Any reference to a memory, a database, or another medium used in embodiments provided in this application may include at least one of a non-volatile or volatile memory. The non-volatile memory may include a read-only memory (ROM), a magnetic tape, a floppy disk, a flash memory, an optical memory, a high-density embedded nonvolatile memory, a resistive random access memory (ReRAM), a magnetoresistive random access memory (MRAM), a ferroelectric random access memory (FRAM), a phase change memory (PCM), a graphene memory, and the like. The volatile memory may include random access memory (RAM) or external cache memory. As an illustration rather than a limitation, the RAM is available in various forms, such as static random-access memory (SRAM) and dynamic random-access memory (DRAM). The database involved in all embodiments of the present disclosure may include at least one of a relational database and a non-relational database. The non-relational database may include, but is not limited to, a blockchain-based distributed database, and the like. The processor involved in all embodiments of the present disclosure may be, but is not limited to, a general-purpose processor, a central processing unit, a graphics processing unit, a digital signal processor, a programmable logic device, a quantum computing-based data processing logic device, and the like.

Technical features of the foregoing all embodiments of the present disclosure may be randomly combined. To make description concise, not all possible combinations of the technical features in the foregoing embodiments are described. However, the combinations of these technical features shall be considered as falling within the scope recorded by this specification provided that no conflict exists.

The above embodiments are merely illustrative of several implementations of this application with specific and detailed description, and are not to be construed as limiting the patent scope of this application. For a person of ordinary skill in the art, several transformations and improvements can be made without departing from a concept of this application. These transformations and improvements belong to the scope of protection of this application. Therefore, the protection scope of this application is subject to the appended claims.

## Claims

1. A route detection method, executable by a computer device, and comprising:
acquiring a navigation route, the navigation route comprising a plurality of sequentially connected links;
determining a plurality of pairs of mutually adjacent links based on the plurality of sequentially connected links;
for each pair of mutually adjacent links, querying a pass count of the each pair of mutually adjacent links within a specified time range based on a historical navigation route; and
obtaining, according to pass counts of the pairs of mutually adjacent links within the specified time range, a pass count sequence of the navigation route, and determining, according to the pass count sequence, whether the navigation route passes through an abnormal link.

2. The method according to claim 1, further comprising:
acquiring a historical navigation route set within the specified time range;
disassembling each historical navigation route in the historical navigation route set, to obtain mutually adjacent links comprised in the historical navigation route;
obtaining a mutually adjacent link set, which comprises disassembled mutually adjacent links; and
accumulating, for each pair of mutually adjacent links in the mutually adjacent link set, navigation counts of the historical navigation route comprising the mutually adjacent links within the specified time range, to obtain a pass count of the mutually adjacent links within the specified time range.

3. The method according to claim 1, wherein the for each pair of mutually adjacent links, querying a pass count of the each pair of mutually adjacent links within a specified time range based on a historical navigation route comprises:
for each pair of mutually adjacent links, querying a first pass count of the each pair of mutually adjacent links within the specified time range based on a historical navigation route within a first specified time range; and
continuing to query a second pass count of the each pair of mutually adjacent links within the specified time range based on a historical navigation route within a second specified time range when it is determined, according to the first pass counts of the pairs of mutually adjacent links within the first specified time range, that the navigation route does not pass through the abnormal link, a time granularity of the second specified time range being greater than a time granularity of the first specified time range.

4. The method according to claim 3, wherein the obtaining, according to first pass counts of the pairs of mutually adjacent links within the first specified time range, a pass count sequence of the navigation route, and determining, according to the pass count sequence, whether the navigation route passes through an abnormal link comprises:
obtaining, according to the first pass counts of the pairs of mutually adjacent links within the first specified time range, a first pass count sequence of the navigation route, and determining, according to the first pass count sequence, whether the navigation route passes through the abnormal link; and
continuing to obtain, when it is determined, according to the first pass count sequence, that the navigation route does not pass through the abnormal link and according to second pass counts of the pairs of mutually adjacent links within the second specified time range, a second pass count sequence of the navigation route, and determining, according to the second pass count sequence, whether the navigation route passes through the abnormal link.

5. The method according to claim 3, further comprising:
correcting, when it is determined, according to the first pass counts of the pairs of mutually adjacent links within the first specified time range, that the navigation route passes through the abnormal link, the navigation route by avoiding the abnormal link, to obtain a corrected navigation route; and
correcting, when it is determined, according to the first pass counts of the pairs of mutually adjacent links within the first specified time range, that the navigation route does not pass through the abnormal link and it is determined, according to the second pass counts of the pairs of mutually adjacent links within the second specified time range, that the navigation route passes through the abnormal link, the navigation route by avoiding the abnormal link, to obtain the corrected navigation route.

6. The method according to claim 1, wherein the obtaining, according to pass counts of the pairs of mutually adjacent links within the specified time range, a pass count sequence of the navigation route, and determining, according to the pass count sequence, whether the navigation route passes through an abnormal link comprises:
arranging, according to sequential order of the pairs of mutually adjacent links on the navigation route, the pass counts of the pairs of mutually adjacent links within the specified time range, to obtain the pass count sequence of the navigation route; and
determining, when a value change tendency of the pass count sequence does not match a preset passing trajectory, that the navigation route passes through the abnormal link.

7. The method according to claim 6, wherein the determining, when a value change tendency of the pass count sequence does not match a preset passing trajectory, that the navigation route passes through the abnormal link comprises:
acquiring, for each pass count in the pass count sequence, adjacent pass counts located on two sides of a current pass count from the pass count sequence; and
determining, when the current pass count is less than a preset threshold and the adjacent pass counts on the two sides of the current pass count are greater than N times a value of the current pass count, that the value change tendency of the pass count sequence does not match the preset passing trajectory, and determining that the mutually adjacent links corresponding to the current pass count are the abnormal link, N being a number greater than 10.

8. The method according to any one of claims 1 to 7, further comprising:
marking an abnormal mark for the abnormal link when the navigation route passes through the abnormal link; and
performing, when the abnormal mark of the abnormal link does not become invalid and for a received navigation route generation request, route planning for the navigation route generation request by avoiding the abnormal link.

9. The method according to any one of claims 1 to 7, further comprising:
performing, when the navigation route passes through the abnormal link, correction processing on the navigation route, to obtain a navigation correction route, the navigation correction route not comprising the abnormal link.

10. The method according to claim 9, wherein the performing, when the navigation route passes through the abnormal link, correction processing on the navigation route, to obtain a navigation correction route comprises:
determining, when the navigation route passes through the abnormal link, two endpoints of the abnormal link, regenerating a local path according to the two endpoints, and replacing the abnormal path in the navigation route with the generated local path, to obtain the navigation correction route.

11. A route detection apparatus, comprising:
an acquisition module, configured to acquire a navigation route, the navigation route comprising a plurality of sequentially connected links;
an adjacent link determination module, configured to determine a plurality of pairs of mutually adjacent links based on the plurality of sequentially connected links;
a pass count query module, configured to, for each pair of mutually adjacent links, query a pass count of the each pair of the mutually adjacent links within a specified time range based on a historical navigation route; and
an abnormality detection module, configured to: obtain, according to pass counts of the pairs of mutually adjacent links within the specified time range, a pass count sequence of the navigation route, and determine, according to the pass count sequence, whether the navigation route passes through an abnormal link.

12. The apparatus according to claim 11, further comprising:
a statistical module, configured to: acquire a historical navigation route set within the specified time range; disassemble each historical navigation route in the historical navigation route set, to obtain the mutually adjacent links comprised in the historical navigation route; obtain a mutually adjacent link set, which comprises disassembled mutually adjacent links; and accumulate, for each pair of mutually adjacent links in the mutually adjacent link set, navigation counts of the historical navigation route comprising the mutually adjacent links within the specified time range, to obtain the pass count of the mutually adjacent links within the specified time range.

13. The apparatus according to claim 11, wherein the pass count query module is further configured to: query a pass count of the mutually adjacent links within the specified time range based on a historical navigation route within a first specified time range; and continue to query a pass count of the mutually adjacent links within the specified time range based on a historical navigation route within a second specified time range in a case that it is determined, according to the pass counts of all mutually adjacent links within the first specified time range, that the navigation route does not pass through the abnormal link, a time granularity of the second specified time range being greater than a time granularity of the first specified time range.

14. The apparatus according to claim 13, wherein the abnormality detection module is further configured to: obtain, according to the pass counts of all mutually adjacent links within the first specified time range, a first pass count sequence of the navigation route, and determine, according to the first pass count sequence, whether the navigation route passes through the abnormal link; and continue to obtain, when it is determined, according to the first pass count sequence, that the navigation route does not pass through the abnormal link and according to the pass counts of all mutually adjacent links within the second specified time range, a second pass count sequence of the navigation route, and determine, according to the second pass count sequence, whether the navigation route passes through the abnormal link.

15. The apparatus according to claim 13, further comprising:
a correction module, configured to: correct, when it is determined, according to the pass counts of all mutually adjacent links within the first specified time range, that the navigation route passes through the abnormal link, the navigation route by avoiding the abnormal link, to obtain a corrected navigation route; and correct, in a case that it is determined, according to the pass counts of all mutually adjacent links within the first specified time range, that the navigation route does not pass through the abnormal link and it is determined, according to the pass counts of all mutually adjacent links within the second specified time range, that the navigation route passes through the abnormal link, the navigation route by avoiding the abnormal link, to obtain the corrected navigation route.

16. The apparatus according to claim 11, wherein the abnormality detection module is further configured to: arrange, according to sequential order of all mutually adjacent links on the navigation route, the pass counts corresponding to all mutually adjacent links within the specified time range, to obtain the pass count sequence of the navigation route; and determine, in a case that a value change tendency corresponding to the pass count sequence does not match a preset passing trajectory, that the navigation route passes through the abnormal link.

17. The apparatus according to claim 16, wherein the abnormality detection module is further configured to: acquire, for each pass count in the pass count sequence, adjacent pass counts located on two sides of a current pass count from the pass count sequence; and determine, in a case that the current pass count is less than a preset threshold and the adjacent pass counts on the two sides of the current pass count are greater than N times a value of the current pass count, that the value change tendency corresponding to the pass count sequence does not match the preset passing trajectory, and determine that the mutually adjacent links corresponding to the current pass count are the abnormal link, N being a number greater than 10.

18. A computer device, comprising a memory and a processor, the memory having computer-readable instructions stored therein, and the processor, when executing the computer-readable instructions, implementing operations of the method according to any one of claims 1 to 10.

19. A computer-readable storage medium, having computer-readable instructions stored therein, and the computer-readable instructions, when executed by a processor, implementing operations of the method according to any one of claims 1 to 10.

20. A computer program product, comprising computer-readable instructions, and the computer-readable instructions, when executed by a processor, implementing operations of the method according to any one of claims 1 to 10.
